# EUROPÄISCHE PATENTSCHRIFT

(11) **EP 2 844 513 B1**
(45) Veröffentlichungstag und Bekanntmachung des Hinweises auf die Patenterteilung: **16.10.2019**
(21) Anmeldenummer: 13719049.2
(22) Anmeldetag: 17.04.2013
(51) Int. Cl.: H02J 1/10, B60L 50/40, B60L 50/52, H02P 4/00, B60L 58/20, B60L 58/40

(54) **VORRICHTUNG UND VERFAHREN ZUR VERSORGUNG EINES ELEKTRISCHEN ANTRIEBES MIT ELEKTRISCHEM STROM**
DEVICE AND METHOD FOR SUPPLYING AN ELECTRIC DRIVE WITH ELECTRIC CURRENT
DISPOSITIF ET PROCÉDÉ PERMETTANT D'ALIMENTER UN ENTRAÎNEMENT ÉLECTRIQUE EN COURANT ÉLECTRIQUE

(30) Priorität: 03.05.2012 DE 102012207379
(43) Veröffentlichungstag der Anmeldung: 11.03.2015
(73) Patentinhaber: Robert Bosch GmbH, 70442 Stuttgart (DE)
(72) Erfinder: KOENIG, Patrick, 77833 Ottersweier (DE); SCHNEIDER, Thomas, 97631 Bad Koenigshofen (DE)
(86) Internationale Anmeldenummer: PCT/EP2013/057992
(87) Internationale Veröffentlichungsnummer: WO 2013/164191

(56) Entgegenhaltungen:
- EP-A1- 2 117 106
- JP-A- 2011 036 101
- US-A1- 2003 211 377

## Beschreibung

Die vorliegende Erfindung betrifft eine Vorrichtung zur Versorgung eines elektrischen Antriebes mit elektrischem Strom gemäß dem Oberbegriff des Patentanspruchs 1, einen Antriebsstrang für ein Fahrzeug gemäß dem Oberbegriff des Patentanspruchs 7 sowie ein Verfahren zur Versorgung eines elektrischen Antriebes mit elektrischem Strom gemäß dem Oberbegriff des Patentanspruchs 8.

### Stand der Technik

Um die Reichweite elektrisch angetriebener Fahrzeuge zu erhöhen, ist es aus dem Stand der Technik bekannt, mehrere, insbesondere unterschiedliche, Energiequellen vorzusehen. Für einen gegenseitigen Ladungsausgleich der Energiequellen sind diese miteinander verbindbar. Weiter werden die Energiequellen auch mit dem elektrischen Antrieb verbunden, damit dieser mit Strom versorgt werden kann. Aus dem Stand der Technik ist es hierzu bekannt, Gleichspannungswandler in Reihe mit den einzelnen elektrischen Energiequellen zu schalten, damit die jeweilige Ausgangsspannung der einzelnen Energiequellen auf ein vorgebbares Spannungsniveau eingestellt werden kann. Beispielsweise ist aus der japanischen Offenlegungsschrift JP 2011-36101 A1 ein Aufbau mit drei Gleichspannungswandlern bekannt. Eine erste Energiequelle, in diesem Falle eine Brennstoffzelle, wird hier gleichzeitig zur Versorgung eines elektrischen Antriebes mit einer hohen Spannung, als auch zur Versorgung von weiteren Verbrauchern im elektrischen Bordnetz des Fahrzeugs mit einer niedrigeren Spannung genutzt. Hierzu sind zwei Gleichspannungswandler an diese Energiequelle angeschlossen, an denen ausgangsseitig jeweils die gewünschte Ausgangsspannung bereitgestellt wird. In dem dargestellten Beispiel ist eine zweite Energiequelle direkt mit dem elektrischen Antrieb verbunden. Über einen dritten Gleichspannungswandler ist der elektrische Antrieb direkt mit den Verbrauchern des elektrischen Bordnetzes verbindbar. Somit wird eine Möglichkeit geschaffen, das Bordnetz des Fahrzeugs auch mittels der zweiten Energiequelle, oder rekuperativ durch den elektrischen Antrieb, mit elektrischer Energie zu versorgen. Eine variable Einstellung der Ausgangsspannung der zweiten Energiequelle gemäß des Bedarfs des elektrischen Antriebs ist bei dieser Schaltung nicht möglich, da die zweite Energiequelle direkt mit dem elektrischen Antrieb verbunden ist.

Aus der Druckschrift EP 2 117 106 A1 ist ein Energieversorgungssystem, insbesondere für ein Fahrzeug, bekannt, welches mehrere Energiespeichereinheiten und drei Gleichspannungswandler aufweist. In Abhängigkeit der Betriebsbedingungen wird der elektrische Antrieb mit Energie aus den Energiespeichereinheiten über mindestens einen der Gleichspannungswandler versorgt.

Aus der Druckschrift US 2003/02 11 377 A1 ist eine brennstoffzellenbasierte Energieversorgung bekannt, wobei mehrere Brennstoffzellen mit jeweils einem Gleichspannungswandler redundant in Serie geschaltet sind zur Versorgung eines elektrischen Antriebs. Die Druckschrift JP 2011036101 beschreibt eine Vorrichtung zur Versorgung eines elektrischen Antriebs mit elektrischem Strom, umfassend drei Gleichspannungswandler zur Kopplung zweier anschließbarer elektrischer Energiequellen mit dem elektrischen Antrieb, wobei die erste Energiequelle eine Brennstoffzelle und die zweite Energiequelle eine Niedervolt-Batterie umfasst, wobei die Gleichspannungswandler derart koppelbar sind, dass eine direkte Kopplung jeder einzelnen der zwei elektrischen Energiequellen mit dem elektrischen Antrieb über einen einzelnen der drei Gleichspannungswandler ausgebildet wird, und wobei die Gleichspannungswandler ringförmig miteinander elektrisch verbunden sind, und derart gekoppelt sind, dass eine direkte Kopplung der mindestens zwei elektrischen Energiequellen über einen dritten Gleichspannungswandler ausgebildet wird, so dass die Energie aus einer ersten Energiequelle über einen ersten Gleichspannungswandler an den elektrischen Antrieb übertragen wird. Die Bremsenergie wird aus dem elektrischen Antrieb mittels des zweiten Gleichspannungswandlers an die zweite Energiequelle übertragen, und über den dritten Gleichspannungswandler ein Energietransfer von der ersten Energiequelle zur zweiten Energiequelle ermöglicht.

### Offenbarung der Erfindung

Die vorliegende Erfindung schafft eine Vorrichtung zur Versorgung eines elektrischen Antriebes für ein Fahrzeug mit elektrischem Strom. Diese Vorrichtung umfasst drei Gleichspannungswandler zur Kopplung mindestens zweier elektrischer Energiequellen mit dem elektrischen Antrieb. Die drei Gleichspannungswandler sind dabei derart koppelbar, dass eine direkte Kopplung jeder einzelnen der mindestens zwei elektrischen Energiequellen mit dem elektrischen Antrieb über einen einzelnen der drei Gleichspannungswandler ausgebildet wird. Die Gleichspannungswandler sind ringförmig miteinander elektrisch verbunden.

Somit ist eine elektrische Schaltung mit drei Gleichspannungswandlern vorgesehen, wobei diese derart angeordnet und koppelbar sind, dass eine direkte Kopplung jeder einzelnen der mindestens zwei elektrischen Energiequellen mit dem elektrischen Antrieb über einen einzelnen der drei Gleichspannungswandler ermöglicht wird. Vorteilhaft kann somit die Ausgangsspannung jeder einzelnen der mindestens zwei elektrischen Energiequellen auf eine vorgebbare elektrische Spannung des elektrischen Antriebs eingestellt werden.

Erfindungsgemäß sind die drei Gleichspannungswandler derart angeordnet und koppelbar, dass eine direkte Kopplung der mindestens zwei elektrischen Energiequellen über einen der drei Gleichspannungswandler ausgebildet wird.

Demnach ist eine Schaltung vorgesehen, die es ermöglicht, die drei Gleichspannungswandler derart zu koppeln, dass die zwei elektrischen Energiequellen über einen der drei Gleichspannungswandler direkt gekoppelt werden. Vorteilhaft wird so eine Möglichkeit geschaffen, elektrische Energie aus der einen elektrischen Energiequelle in die andere zu transferieren. Die Energie wird bei dieser Anordnung nur über einen einzelnen Gleichspannungswandler übertragen. Somit werden die Umwandlungsverluste, die während des Energietransfers innerhalb der Gleichspannungswandler entstehen, minimiert.

In einer Ausgestaltung der Erfindung sind die drei Gleichspannungswandler derart koppelbar, dass eine direkte Kopplung einer einzelnen der mindestens zwei elektrischen Energiequellen mit dem elektrischen Antrieb über zwei parallel geschaltete Gleichspannungswandler ausgebildet wird.

Es ist somit eine Schaltung vorgesehen, bei der die drei Gleichspannungswandler derart angeordnet sind, dass eine der elektrischen Energiequellen mit dem elektrischen Antrieb mittels zwei parallel geschalteter Gleichspannungswandler gekoppelt wird. Vorteilhaft wird somit ermöglicht, dass die einzelne Energiequelle die zu übertragende elektrische Leistung mittels zweier Gleichspannungswandler an den elektrischen Antrieb übertragen kann. Je nach Auslegung kann ein einzelner Gleichspannungswandler dauerhaft nur eine begrenzte elektrische Leistung übertragen. Somit wird mit dieser Anordnung ermöglicht, eine deutlich höhere Leistung an den elektrischen Antrieb zu übertragen, als wenn nur ein Gleichspannungswandler zur Verfügung stehen würde.

In einer Ausgestaltung der Erfindung ist eine dritte elektrische Energiequelle vorgesehen. Diese ist derart an die Vorrichtung koppelbar, dass eine direkte Kopplung der dritten elektrischen Energiequelle mit einer der mindestens zwei elektrischen Energiequellen ausgebildet wird.

Somit ist eine Schaltung vorgesehen, bei der drei Gleichspannungswandler derart angeordnet sind, dass drei Energiequellen anschließbar sind, und deren Energie mittels der Gleichspannungswandler an einen anschließbaren elektrischen Antrieb übertragen werden können. Wobei in dieser Ausgestaltung die dritte elektrische Energiequelle mit einer der mindestens zwei elektrischen Energiequellen direkt verbindbar ist. Vorteilhaft wird somit eine Schaltung geschaffen, die einen direkten Energieaustausch zwischen zwei der drei Energiequellen ermöglicht. Bei diesem Energietransfer entstehen somit keine Verluste innerhalb eines Gleichspannungswandlers.

In einer anderen Ausgestaltung der Erfindung ist vorgesehen, dass die elektrischen Energiequellen eine Brennstoffzelle und/oder einen elektrischen Akkumulator und/oder einen Kondensator umfassen.

Vorteilhaft wird so ein System geschaffen, welches aufgrund der unterschiedlichen Beschaffenheiten der Energiequellen, in Bezug auf deren chemischen und physikalischen Parametern, einen robusten und ausdauernden Betrieb des elektrischen Fahrzeuges ermöglichen.

In einer anderen Ausgestaltung der Erfindung ist vorgesehen, dass die drei Gleichspannungswandler baugleich sind. Unter baugleich wird in diesem Zusammenhang insbesondere verstanden, dass möglichst viele gleiche Bauteile oder Gleichteile für die einzelnen Gleichspannungswandler verwendet werden. Insbesondere ist so ist die Energieübertragungsleistung, für die die Gleichspannungswandler ausgelegt sind, gleich. Je nach Anwendungsfall und angeschlossener Energiequelle sind die Gleichspannungswandler unidirektional oder bidirektional auszulegen. Insbesondere im Zusammenhang mit wiederaufladbaren Energiequellen bietet es sich an, bidirektionale Gleichspannungswandler zu verwenden.

Vorteilhaft ergeben sich so minimierte Stückkosten der einzelnen Bauteile für die Gleichspannungswandler.

Ferner besitzen die vorgestellten Schaltungen durch eine teilweise redundante Funktionalität und Nutzung der Gleichspannungswandler eine hohe Ausfallsicherheit. Durch die beschriebenen gezielten Anordnungen beziehungsweise Umschaltungen und Zusammenschaltungen der Gleichspannungswandler ergeben sich Vorteile beispielsweise bei einem Gefrierstart einer Brennstoffzelle, da diese für einen schnellen Gefrierstart eine hohe Stromabgabe bei vergleichsweise niedrigen Spannungen benötigt. Bei einem Gefrierstart ist das Spannungsniveau am Akkumulator in der Regel geringer als das Spannungsniveau des elektrischen Antriebs. Da die Gleichspannungswandler technisch bedingt in der Praxis nur ein gewisses Übersetzungsverhältnis ermöglichen, kann mit dem zusätzlichen Gleichspannungswandler zwischen Brennstoffzelle und Akkumulator, im folgenden "Gefrierstartwandler" genannt, die Brennstoffzelle mit einem geringeren Spannungsniveau betrieben werden, als mit dem Gleichspannungswandler zwischen Brennstoffzelle und Antrieb. Dies ermöglicht einen sicher und schnell ablaufenden Brennstoffzellen- Start im gefrorenen Zustand. Dieser für den Gefrierstart eingesetzte Gleichspannungswandler lässt sich auch sinnvoll im (Normal-)Betrieb des Fahrzeugs nutzen, beziehungsweise erlaubt die optimale Ausnutzung eines weiteren Energiespeichers wie beispielsweise eines SuperCaps.

Die vorliegende Erfindung schafft weiter einen Antriebsstrang für ein Fahrzeug, welcher mindestens zwei elektrische Energiequellen, einen elektrischen Antrieb und eine Vorrichtung zur Versorgung des elektrischen Antriebes mit elektrischem Strom umfasst. Diese Vorrichtung umfasst dabei drei Gleichspannungswandler zur Kopplung mindestens zweier elektrischer Energiequellen mit dem elektrischen Antrieb. Die drei Gleichspannungswandler sind dabei derart koppelbar, dass eine direkte Kopplung jeder einzelnen der mindestens zwei elektrischen Energiequellen mit dem elektrischen Antrieb über einen einzelnen der drei Gleichspannungswandler ausgebildet wird.

Somit ist ein Antriebsstrang mit einer elektrischen Schaltung mit drei Gleichspannungswandlern vorgesehen, wobei diese derart angeordnet und koppelbar sind, dass eine direkte Kopplung jeder einzelnen der mindestens zwei elektrischen Energiequellen mit dem elektrischen Antrieb über einen einzelnen der drei Gleichspannungswandler ermöglicht wird. Vorteilhaft kann somit die Ausgangsspannung jeder einzelnen der mindestens zwei elektrischen Energiequellen des Antriebsstrangs auf eine vorgebbare elektrische Spannung des elektrischen Antriebs eingestellt werden.

Weiter schafft die Erfindung ein Verfahren zur Versorgung eines elektrischen Antriebs mit elektrischem Strom. Bei diesem Verfahren sind drei Gleichspannungswandler zur Kopplung mindestens zweier anschließbarer elektrischer Energiequellen an den elektrischen Antrieb vorgesehen. Erfindungsgemäß werden die Gleichspannungswandler bei dem Verfahren derart gekoppelt, dass jede einzelne der mindestens zwei elektrischen Energiequellen mit dem elektrischen Antrieb über einen einzelnen der drei Gleichspannungswandler direkt gekoppelt wird.

Somit wird ein Verfahren bereitgestellt, bei dem drei Gleichspannungswandler derart gekoppelt werden, dass eine direkte Kopplung jeder einzelnen der mindestens zwei elektrischen Energiequellen mit dem elektrischen Antrieb über einen einzelnen der drei Gleichspannungswandler ermöglicht wird. Vorteilhaft kann mit diesem Verfahren die Einstellung der Ausgangsspannungen jeder einzelnen der mindestens zwei elektrischen Energiequellen auf eine vorgebbare elektrische Spannung des elektrischen Antriebs erfolgen.

In einer Ausgestaltung der Erfindung werden die Gleichspannungswandler derart gekoppelt, dass die mindestens zwei elektrischen Energiequellen über einen der Gleichspannungswandler direkt gekoppelt werden.

Demnach wird ein Verfahren bereitgestellt, das es ermöglicht, die drei Gleichspannungswandler derart zu koppeln, dass die zwei elektrischen Energiequellen über einen der drei Gleichspannungswandler direkt gekoppelt werden. Vorteilhaft wird so ein Verfahren geschaffen, die elektrische Energie aus der einen elektrischen Energiequelle in die andere zu transferieren. Die Energie wird bei diesem Verfahren nur über einen einzelnen Gleichspannungswandler übertragen. Somit werden die Umwandlungsverluste, die während des Energietransfers innerhalb der Gleichspannungswandler entstehen, minimiert.

In einer Ausgestaltung der Erfindung ist vorgesehen, dass die Gleichspannungswandler derart gekoppelt werden, dass eine einzelne der mindestens zwei elektrischen Energiequellen mit dem elektrischen Antrieb über zwei parallel geschaltete Gleichspannungswandler direkt gekoppelt wird.

Es ist somit ein Verfahren vorgesehen, bei dem die drei Gleichspannungswandler derart gekoppelt werden, dass eine der elektrischen Energiequellen mit dem elektrischen Antrieb mittels zwei parallel geschalteter Gleichspannungswandler gekoppelt wird. Vorteilhaft wird somit ein Verfahren geschaffen, das es ermöglicht, die zu übertragende elektrische Leistung der einzelnen Energiequelle mittels zweier Gleichspannungswandler an den elektrischen Antrieb zu übertragen. Je nach Auslegung kann ein einzelner Gleichspannungswandler dauerhaft nur eine begrenzte elektrische Leistung übertragen. Somit wird mit diesem Verfahren eine deutlich höhere Leistungsübertragung an den elektrischen Antrieb ermöglicht, als wenn nur ein Gleichspannungswandler genutzt würde.

In einer Ausgestaltung der Erfindung ist eine dritte elektrische Energiequelle vorgesehen, die derart angekoppelt wird, dass die dritte elektrische Energiequelle mit einer der mindestens zwei elektrischen Energiequellen direkt gekoppelt wird.

Somit wird ein Verfahren bereitgestellt, dass den Anschluss dreier Energiequellen an die drei Gleichspannungswandler derart ermöglicht, dass die Energie der drei Energiequellen an einen anschließbaren elektrischen Antrieb übertragen werden kann, wobei die dritte elektrische Energiequelle mit einer der mindestens zwei elektrischen Energiequellen direkt verbindbar ist. Vorteilhaft wird somit ein Verfahren geschaffen, welches einen direkten Energieaustausch zwischen zwei der drei Energiequellen ermöglicht. Bei diesem Energietransfer entstehen somit keine Verluste innerhalb eines Gleichspannungswandlers.

Es versteht sich, dass die Merkmale, Eigenschaften und Vorteile des erfindungsgemäßen Verfahrens entsprechend auf die erfindungsgemäße Vorrichtung und umgekehrt bzw. auf den Antriebsstrang zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Figur 1 zeigt in schematischer Form eine erfindungsgemäße Vorrichtung zur Versorgung eines elektrischen Antriebes für ein Fahrzeug mit elektrischem Strom.
Figur 2 zeigt in schematischer Form ein Ausführungsbeispiel der erfindungsgemäßen Vorrichtung zur Versorgung eines elektrischen Antriebes für ein Fahrzeug mit elektrischem Strom.
Figur 3 zeigt in schematischer Form ein weiteres Ausführungsbeispiel der erfindungsgemäßen Vorrichtung zur Versorgung eines elektrischen Antriebes für ein Fahrzeug mit elektrischem Strom.
Figur 4 zeigt in schematischer Form ein elektrisch angetriebenes Fahrzeug mit einem erfindungsgemäßen Antriebsstrang.
Figur 5 zeigt in schematischer Form ein erfindungsgemäßes Verfahren zur Versorgung eines elektrischen Antriebes für ein Fahrzeug mit elektrischem Strom.

In den Figuren sind gleiche und funktionsgleiche Elemente, Merkmale und Komponenten - so fern nichts anderes ausgeführt ist - jeweils mit denselben Bezugszeichen versehen. Es versteht sich, dass Komponenten und Elemente in den Zeichnungen aus Gründen der Übersichtlichkeit nicht notwendigerweise maßstabsgetreu wiedergeben sind.

Weitere mögliche Ausgestaltungen und Weiterbildungen und Implementierungen der Erfindung umfassen auch nicht explizit genannte Kombinationen von zuvor oder im Folgenden beschriebenen Merkmalen der Erfindung.

### Ausführungsformen der Erfindung

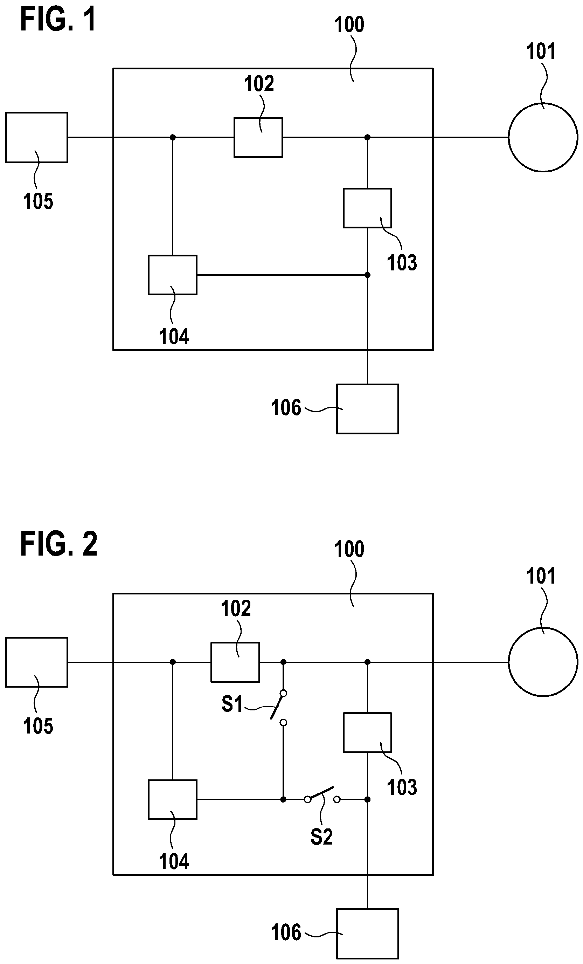

Figur 1 zeigt in schematischer Form eine erfindungsgemäße Vorrichtung 100 zur Versorgung eines elektrischen Antriebes 101 für ein Fahrzeug mit elektrischem Strom. An die Vorrichtung sind die beiden dargestellten Energiequellen 105, 106 anschließbar. Die Vorrichtung 100 umfasst drei Gleichspannungswandler 102, 103 und 104. Die Gleichspannungswandler 102, 103 und 104 sind derart angeordnet, elektrisch verbunden und zusammengeschaltet, dass eine effiziente Versorgung des elektrischen Antriebs 101 mit Energie aus den Energiequellen 105, 106 und ein effizienter Energieaustausch zwischen den Energiequellen 105 und 106 ermöglicht wird. Die Gleichspannungswandler 102, 103 und 104 sind ringförmig miteinander elektrisch verbunden. Insbesondere werden die Energiequellen 105, 106 und der elektrische Antrieb 101 jeweils zwischen zwei der drei Gleichspannungswandler 102, 103, 104 elektrisch angeschlossen. Die Energie aus der ersten Energiequelle 105 wird über den ersten Gleichspannungswandler 102 an den elektrischen Antrieb 101 übertragen. Der elektrische Antrieb 101 umfasst dabei beispielsweise einen Wechselrichter zum Umwandeln der Gleichspannung in eine Wechselspannung und eine elektrische Maschine. Wenn es sich bei der elektrischen Maschine um eine Gleichspannungsmaschine handelt, kann der Wechselrichter entfallen. Die Energie aus der zweiten Energiequelle 106 wird mittels des zweiten Gleichspannungswandlers 103 ebenfalls an den elektrischen Antrieb 101 übertragen. Der dritte Gleichspannungswandler 104 ist derart angeordnet, dass über den dritten Gleichspannungswandler 104 ein Energietransfer von der ersten Energiequelle 105 zur zweiten Energiequelle 106 ermöglicht wird. Diese Anordnung ist insbesondere vorteilhaft, wenn als erste Energiequelle 105 eine Brennstoffzelle verwendet wird und die zweite Energiequelle 106 als elektrischer Akkumulator ausgeführt ist. In diesem Ausführungsbeispiel genügt es, wenn der erste und der dritte Gleichspannungswandler 102, 104 unidirektional und der zweite Gleichspannungswandler 103 bidirektional ausgeführt ist, da ein Energiefluss in Richtung der Brennstoffzelle nicht notwendig ist. Mittels des zweiten bidirektionalen Gleichspannungswandlers 103 wird auch ein Laden des elektrischen Akkumulators 106 bei regenerativen Betrieb der elektrischen Maschine 101 ermöglicht.

Figur 2 zeigt in schematischer Form ein weiteres Ausführungsbeispiel der erfindungsgemäßen Vorrichtung 100 zur Versorgung des elektrischen Antriebs für ein Fahrzeug mit elektrischem Strom. In diesem Ausführungsbeispiel umfasst die Vorrichtung 100 eine weitere elektrische Verbindung, die einen parallelen Betrieb des ersten und des dritten Gleichspannungswandlers 102, 104 zur Versorgung des elektrischen Antriebs 101 aus der ersten elektrischen Energiequelle 105 ermöglicht. Die weitere elektrische Verbindung bildet hierzu ein direkte elektrische Verbindung zwischen dem elektrischen Antrieb 101 und dem dritten Gleichspannungswandler 104 an seiner der ersten elektrischen Energiequelle 105 abgewandten Seite aus. Ein zusätzliches erstes Schaltelement S1 ist auf dieser Leitung vorgesehen zum Öffnen oder Verbinden dieser elektrischen Leitung. Während des parallelen Betriebes des ersten und des dritten Gleichspannungswandlers 102, 104 zur Versorgung des elektrischen Antriebs 101 aus der ersten elektrischen Energiequelle 105 ist das Schaltelement S1 geschlossen. Darüberhinaus ist ein zweites Schaltelement S2 vorgesehen, welches für den parallelen Betrieb geöffnet wird. Dieses ist so angeordnet, dass die elektrische Verbindung sowohl des zweiten Gleichspannungswandlers 103 als auch der zweiten Energiequelle 106 mit dem ersten Schaltelement S1 und dem dritten Gleichspannungswandler 104 unterbrochen oder geschlossen werden kann. Für den Parallelbetrieb der Gleichspannungswandler 102 und 104 werden somit der Schalter S1 geschlossen und der Schalter S2 geöffnet. Für die bereits bei Figur 1 beschriebenen Betriebsarten wird der Schalter S1 geöffnet und der Schalter S2 geschlossen.

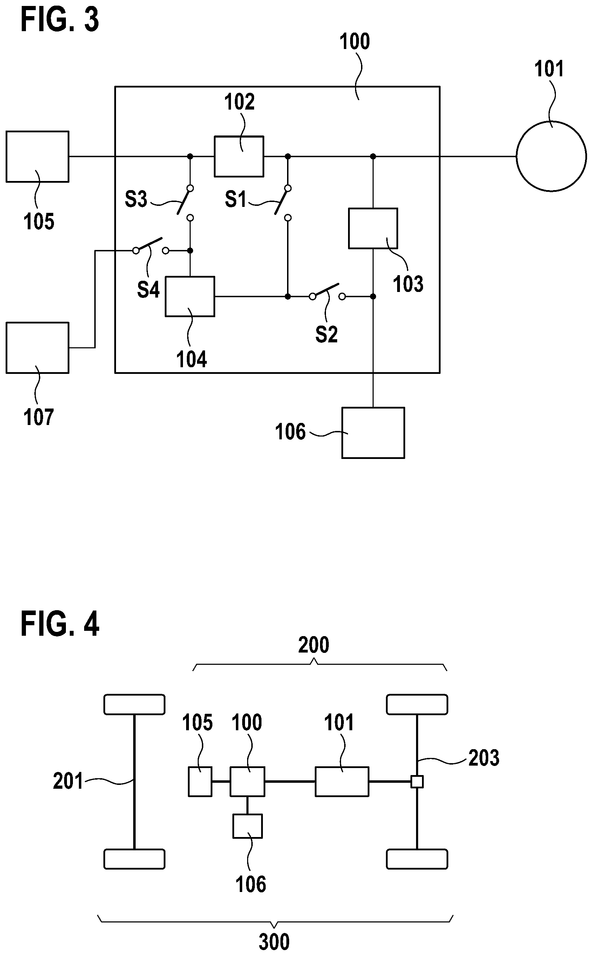

Figur 3 zeigt in schematischer Form ein weiteres Ausführungsbeispiel der erfindungsgemäßen Vorrichtung 100. Mittels eines zusätzlich vorgesehenen vierten Schaltelementes S4 ist eine dritte Energiequelle 107 an die elektrische Verbindung zwischen der ersten Energiequelle 105 und dem dritten Gleichspannungswandler 104 ankoppelbar. Ein weiteres Schaltelement S3 ist vorgesehen. Dieses ist so angeordnet, dass die elektrische Verbindung sowohl des ersten Gleichspannungswandlers 102 als auch der ersten Energiequelle 105 mit dem vierten Schaltelement S4 und dem dritten Gleichspannungswandler 104 unterbrochen oder geschlossen werden kann. Durch Schließen des dritten und des vierten Schaltelementes S3, S4 lässt sich somit ein direkter Energietransfer seitens der ersten Energiequelle 105 zur dritten Energiequelle 107 ermöglichen.

Die dritte Energiequelle 107 kann somit effizient aufgeladen werden. Dies ist besonders vorteilhaft bei Verwendung eines Kondensators oder eines Supercaps als dritte Energiequelle 107. Durch alleiniges Schließen des Schaltelementes S4 sowie je nach Schalterstellung von S3, S1 und S2 kann die Energie aus der Energiequelle 107 entweder dem elektrischen Antrieb 101 oder den Energiequellen 105, 106 zugeführt werden.

Figur 4 zeigt in schematischer Form einen erfindungsgemäßen Antriebsstrang 200 in einem elektrisch angetriebenen Fahrzeug 300. Es ist die Vorderachse 201 mit Rädern des Fahrzeugs dargestellt. Der elektrische Antrieb 101 treibt die Antriebsachse 203 mit Rädern an. Der elektrische Antrieb 101, beispielsweise umfassend einen Wechselrichter und eine elektrische Maschine, wird mit Energie aus den elektrischen Energiequellen 105, 106 über eine erfindungsgemäße Vorrichtung 100 mit elektrischer Energie versorgt.

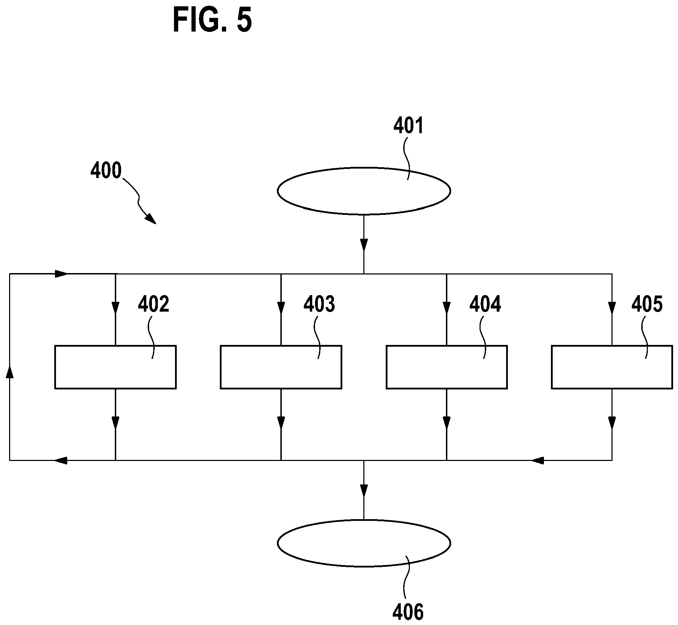

Figur 5 zeigt ein erfindungsgemäßes Verfahren 400 zur Versorgung eines elektrischen Antriebes 101 für ein Fahrzeug mit elektrischem Strom. In Schritt 401 wird das Verfahren gestartet. Je nach dem, welche Betriebsart gewählt wird, werden die weiteren Schritte 402, 403, 404, 405 in beliebiger Reihenfolge und Dauer angewählt und beliebig oft wiederholt. Mit Schritt 406 wird das Verfahren beendet.

In Schritt 402 werden die Gleichspannungswandler in einer ersten Betriebsart derart gekoppelt und betrieben, dass jede einzelne der mindestens zwei elektrischen Energiequellen 105, 106 mit dem elektrischen Antrieb 101 über einen der einzelnen der drei Gleichspannungswandler 102, 103, 104 direkt gekoppelt wird. Hierzu wird beispielsweise durch getaktetes Ansteuern und insbesondere Schließen der internen Schalter des ersten Gleichspannungswandlers 102 die erste Energiequelle 105 mit dem elektrischen Antrieb 101 gekoppelt und die Energie aus der ersten Energiequelle 105 an den elektrischen Antrieb 101 übertragen. Ebenso geschieht dies mit dem zweiten Gleichspannungswandler 103 und der zweiten Energiequelle 106.

In Verfahrensschritt 403 werden die Gleichspannungswandler in einer zweiten Betriebsart derart gekoppelt und betrieben, dass die mindestens zwei elektrischen Energiequellen 105, 106 über einen der drei Gleichspannungswandler 102, 103, 104 direkt gekoppelt werden. Hierzu wird beispielsweise durch getaktetes Ansteuern und insbesondere Schließen der internen Schalter des dritten Gleichspannungswandlers 104 die erste Energiequelle 105 mit der zweiten elektrischen Energiequelle 106 gekoppelt und die Energie aus der ersten Energiequelle 105 an die zweite Energiequelle 106 übertragen. Bei hohen Antriebsleistungen kann zeitweise auch Strom aus der ersten Energiequelle über die Reihenschaltung des dritten Gleichspannungswandlers 104 und des zweiten Gleichspannungswandlers 103 zum elektrischen Antrieb 101 geleitet werden. Dieser nicht ganz optimale Pfad wird allerdings insbesondere in Beschleunigungsphasen beziehungsweise Phasen dauerhaft hoher Geschwindigkeiten des Fahrzeugs genutzt.

In Verfahrensschritt 404 werden die Gleichspannungswandler in einer dritten Betriebsart derart gekoppelt und betrieben, dass eine einzelne der mindestens zwei elektrischen Energiequellen 105, 106 mit dem elektrischen Antrieb 101 über zwei parallel geschaltete Gleichspannungswandler 102, 103, 104 direkt gekoppelt werden. Hierzu wird beispielsweise mittels Schließen des Schaltelementes S1 und Öffnen des Schaltelementes S2 sowie durch getaktetes Ansteuern und insbesondere Schließen der internen Schalter des ersten und dritten Gleichspannungswandlers 102, 104 die erste Energiequelle 105 über den ersten und dritten Gleichspannungswandler 102, 104 mit dem elektrischen Antrieb 101 gekoppelt und die Energie aus der ersten Energiequelle 105 an den elektrischen Antrieb 101 übertragen.

In Verfahrensschritt 405 wird in einer vierten Betriebsart eine dritte elektrische Energiequelle 107 derart an den drei Gleichspannungswandlern 102, 103, 104 angekoppelt, dass die dritte elektrische Energiequelle 107 mit einer der mindestens zwei elektrischen Energiequellen 105, 106 direkt gekoppelt wird. Hierzu wird beispielsweise mittels Schließen des Schaltelementes S4 und Schließen des Schaltelementes S3 die erste Energiequelle 105 direkt mit der dritten Energiequelle 107 gekoppelt, sodass ein Energietransfer zwischen beiden Energiequellen 105 und 107 stattfindet.

## Patentansprüche

1. Vorrichtung (100) zur Versorgung eines elektrischen Antriebes (101) für ein Fahrzeug (300) mit elektrischem Strom, umfassend drei Gleichspannungswandler (102, 103, 104) zur Kopplung mindestens zweier anschließbarer elektrischer Energiequellen (105, 106) mit dem elektrischen Antrieb (101), wobei die Gleichspannungswandler (102, 103, 104) derart koppelbar sind, dass eine direkte Kopplung jeder einzelnen der mindestens zwei elektrischen Energiequellen (105, 106) mit dem elektrischen Antrieb (101) über einen einzelnen der drei Gleichspannungswandler (102, 103, 104) ausgebildet wird, wobei die Gleichspannungswandler (102, 103, 104) ringförmig miteinander elektrisch verbunden sind,
und derart gekoppelt sind, dass eine direkte Kopplung der mindestens zwei elektrischen Energiequellen (105, 106) über einen dritten Gleichspannungswandler (104) ausgebildet wird,
so dass
die Energie aus einer ersten Energiequelle (105) über einen ersten Gleichspannungswandler (102) an den elektrischen Antrieb (101) übertragen wird, **dadurch gekennzeichnet, dass** die Energie aus einer zweiten Energiequelle (106) mittels eines zweiten Gleichspannungswandlers (103) ebenfalls an den elektrischen Antrieb (101) übertragen wird, und über den dritten Gleichspannungswandler (104) ein Energietransfer von der ersten Energiequelle (105) zur zweiten Energiequelle (106) ermöglicht wird.

2. Vorrichtung nach einem der vorherigen Ansprüche, **dadurch gekennzeichnet, dass** die Gleichspannungswandler (102, 103, 104) derart koppelbar sind, dass eine direkte Kopplung einer einzelnen der mindestens zwei elektrischen Energiequellen (105, 106) mit dem elektrischen Antrieb (101) über zwei parallel geschaltete Gleichspannungswandler (102, 103, 104) ausgebildet wird.

3. Vorrichtung nach einem der vorherigen Ansprüche, **dadurch gekennzeichnet, dass** eine dritte elektrische Energiequelle (107) vorgesehen ist, die derart an die Vorrichtung (100) koppelbar ist, dass eine direkte Kopplung der dritten elektrischen Energiequelle (107) mit einer der mindestens zwei elektrischen Energiequellen (105, 106) ausgebildet wird.

4. Vorrichtung nach einem der vorherigen Ansprüche, **dadurch gekennzeichnet, dass** die elektrischen Energiequellen (105, 106, 107) eine Brennstoffzelle und/oder einen Akkumulator und/oder einen Kondensator umfassen.

5. Vorrichtung nach einem der vorherigen Ansprüche, **dadurch gekennzeichnet, dass** die drei Gleichspannungswandler (102, 103, 104) baugleich sind.

6. Antriebsstrang (200) für ein Fahrzeug (300), umfassend mindestens zwei elektrische Energiequellen (105, 106), einen elektrischen Antrieb (101) für ein Fahrzeug (300) und eine Vorrichtung (100) zur Versorgung des elektrischen Antriebes (101) mit elektrischem Strom nach einem der Ansprüche 1 bis 5.

7. Verfahren (400) zur Versorgung eines elektrischen Antriebes (101) für ein Fahrzeug (300) mit elektrischem Strom, wobei drei Gleichspannungswandler (102, 103, 104) zur Kopplung mindestens zweier anschließbarer elektrischer Energiequellen (105, 106) an den elektrischen Antrieb (101) vorgesehen sind, wobei die Gleichspannungswandler (102, 103, 104) derart gekoppelt werden (402), dass jede einzelne der mindestens zwei elektrischen Energiequellen (105, 106) mit dem elektrischen Antrieb (101) über einen einzelnen der drei Gleichspannungswandler (102, 103, 104) direkt gekoppelt wird,
wobei die Gleichspannungswandler (102, 103, 104) ringförmig miteinander elektrisch verbunden sind,
und derart gekoppelt werden, dass eine direkte Kopplung der mindestens zwei elektrischen Energiequellen (105, 106) über einen dritten Gleichspannungswandler (104) ausgebildet wird,
so dass die Energie aus einer ersten Energiequelle (105) über einen ersten Gleichspannungswandler (102) an den elektrischen Antrieb (101) übertragen wird, **dadurch gekennzeichnet, dass** die Energie aus einer zweiten Energiequelle (106) mittels eines zweiten Gleichspannungswandlers (103) ebenfalls an den elektrischen Antrieb (101) übertragen wird, und über den dritten Gleichspannungswandler (104) ein Energietransfer von der ersten Energiequelle (105) zur zweiten Energiequelle (106) ermöglicht wird.

8. Verfahren (400) nach einem der Ansprüche 6 bis 7, **dadurch gekennzeichnet, dass** die Gleichspannungswandler (102, 103, 104) derart gekoppelt werden (404), dass eine einzelne der mindestens zwei elektrischen Energiequellen (105, 106) mit dem elektrischen Antrieb (101) über zwei parallel geschaltete Gleichspannungswandler (102, 103, 104) direkt gekoppelt wird.

9. Verfahren nach einem der Ansprüche 6 bis 8, **dadurch gekennzeichnet, dass** eine dritte elektrische Energiequelle (107) derart an die drei Gleichspannungswandler (102, 103, 104) angekoppelt wird (405), dass die dritte elektrische Energiequelle (107) mit einer der mindestens zwei elektrischen Energiequellen (105, 106) direkt gekoppelt wird.

## Claims

1. Device (100) for supplying electric current to an electric drive (101) for a vehicle (300), comprising three DC-to-DC converters (102, 103, 104) for coupling at least two connectable electrical energy sources (105, 106) to the electric drive (101), wherein the DC-to-DC converters (102, 103, 104) are couplable in such a way that a direct coupling of each individual one of the at least two electrical energy sources (105, 106) to the electric drive (101) is formed via a single one of the three DC-to-DC converters (102, 103, 104), wherein the DC-to-DC converters (102, 103, 104) are electrically connected to one another in the form of a ring, and are coupled in such a way that a direct coupling of the at least two electrical energy sources (105, 106) via a third DC-to-DC converter (104) is formed, so that the energy from a first energy source (105) is transmitted to the electric drive (101) via a first DC-to-DC converter (102), **characterized in that**
the energy from a second energy source (106) is transmitted likewise to the electric drive (101) by means of a second DC-to-DC converter (103), and an energy transfer from the first energy source (105) to the second energy source (106) is made possible via the third DC-to-DC converter (104).

2. Device according to one of the preceding claims, **characterized in that** the DC-to-DC converters (102, 103, 104) are couplable in such a way that a direct coupling of a single one of the at least two electrical energy sources (105, 106) to the electric drive (101) via two DC-to-DC converters (102, 103, 104) connected in parallel is formed.

3. Device according to one of the preceding claims, **characterized in that** a third electrical energy source (107) is provided, which is couplable to the device (100) in such a way that a direct coupling of the third electrical energy source (107) to one of the at least two electrical energy sources (105, 106) is formed.

4. Device according to one of the preceding claims, **characterized in that** the electrical energy sources (105, 106, 107) comprise a fuel cell and/or a rechargeable battery and/or a capacitor.

5. Device according to one of the preceding claims, **characterized in that** the three DC-to-DC converters (102, 103, 104) have an identical design.

6. Drive train (200) for a vehicle (300), comprising at least two electrical energy sources (105, 106), an electric drive (101) for a vehicle (300) and a device (100) for supplying electric current to the electric drive (101) according to one of Claims 1 to 5.

7. Method (400) for supplying electric current to an electric drive (101) for a vehicle (300), wherein three DC-to-DC converters (102, 103, 104) are provided for coupling at least two connectable electrical energy sources (105, 106) to the electric drive (101), wherein the DC-to-DC converters (102, 103, 104) are coupled (402) in such a way that each individual one of the at least two electrical energy sources (105, 106) is coupled directly to the electric drive (101) via an individual one of the three DC-to-DC converters (102, 103, 104), wherein the DC-to-DC converters (102, 103, 104) are electrically connected to one another in the form of a ring, and are coupled in such a way that a direct coupling of the at least two electrical energy sources (105, 106) via a third DC-to-DC converter (104) is formed, so that the energy from a first energy source (105) is transmitted to the electric drive (101) via a first DC-to-DC converter (102), **characterized in that**
the energy from a second energy source (106) is transmitted likewise to the electric drive (101) by means of a second DC-to-DC converter (103), and an energy transfer from the first energy source (105) to the second energy source (106) is made possible via the third DC-to-DC converter (104).

8. Method (400) according to either of Claims 6 and 7, **characterized in that** the DC-to-DC converters (102, 103, 104) are coupled (404) in such a way that a single one of the at least two electrical energy sources (105, 106) is coupled directly to the electric drive (101) via two DC-to-DC-converters (102, 103, 104) connected in parallel.

9. Method according to one of Claims 6 to 8, **characterized in that** a third electrical energy source (107) is coupled (405) to the three DC-to-DC converters (102, 103, 104) in such a way that the third electrical energy source (107) is coupled directly to one of the at least two electrical energy sources (105, 106).

## Revendications

1. Dispositif (100) pour alimenter un mécanisme d'entraînement électrique (101) pour un véhicule (300) avec du courant électrique, comprenant trois convertisseurs de tension continue (102, 103, 104) destinés à connecter au moins deux sources d'énergie électriques (105, 106) raccordables au mécanisme d'entraînement électrique (101), les convertisseurs de tension continue (102, 103, 104) pouvant être connectés de telle sorte qu'une connexion directe de chacune des au moins deux sources d'énergie électriques (105, 106) individuelles au mécanisme d'entraînement électrique (101) est formée par le biais d'un seul des trois convertisseurs de tension continue (102, 103, 104),
les convertisseurs de tension continue (102, 103, 104) étant reliés électriquement les uns aux autres en forme d'anneau,
et étant connectés de telle sorte qu'une connexion directe des au moins deux sources d'énergie électriques (105, 106) est formée par le biais d'un troisième convertisseur de tension continue (104),
de sorte que l'énergie provenant d'une première source d'énergie (105) est transmise au mécanisme d'entraînement électrique (101) par le biais d'un premier convertisseur de tension continue (102)
**caractérisé en ce que**
l'énergie provenant d'une deuxième source d'énergie (106) est également transmise au mécanisme d'entraînement électrique (101) au moyen d'un deuxième convertisseur de tension continue (103)
et un transfert d'énergie de la première source d'énergie (105) à la deuxième source d'énergie (106) est rendu possible par le biais du troisième convertisseur de tension continue (104).

2. Dispositif selon l'une des revendications précédentes, **caractérisé en ce que** les convertisseurs de tension continue (102, 103, 104) peuvent être connectés de telle sorte qu'une connexion directe d'une seule des au moins deux sources d'énergie électriques (105, 106) au mécanisme d'entraînement électrique (101) est formée par le biais de deux convertisseurs de tension continue (102, 103, 104) branchés en parallèle.

3. Dispositif selon l'une des revendications précédentes, **caractérisé en ce qu'**une troisième source d'énergie électrique (107) est présente, laquelle peut être connectée au dispositif (100) de telle sorte qu'une connexion directe de la troisième source d'énergie électrique (107) à l'une des au moins deux sources d'énergie électriques (105, 106) est formée.

4. Dispositif selon l'une des revendications précédentes, **caractérisé en ce que** les sources d'énergie électriques (105, 106, 107) comprennent une pile à combustible et/ou un accumulateur et/ou un condensateur.

5. Dispositif selon l'une des revendications précédentes, **caractérisé en ce que** les trois convertisseurs de tension continue (102, 103, 104) sont de construction identique.

6. Groupe motopropulseur (200) pour un véhicule (300), comprenant au moins deux sources d'énergie électriques (105, 106), un mécanisme d'entraînement électrique (101) pour un véhicule (300) et un dispositif (100) selon l'une des revendications 1 à 5 pour alimenter le mécanisme d'entraînement électrique (101) avec du courant électrique.

7. Procédé (400) pour alimenter un mécanisme d'entraînement électrique (101) pour un véhicule (300) avec du courant électrique, trois convertisseurs de tension continue (102, 103, 104) destinés à connecter au moins deux sources d'énergie électriques (105, 106) raccordables au mécanisme d'entraînement électrique (101) étant présents, les convertisseurs de tension continue (102, 103, 104) étant connectés de telle sorte (402) que chacune des au moins deux sources d'énergie électriques (105, 106) individuelles est connectée directement au mécanisme d'entraînement électrique (101) par le biais d'un seul des trois convertisseurs de tension continue (102, 103, 104),
les convertisseurs de tension continue (102, 103, 104) étant reliés électriquement les uns aux autres en forme d'anneau,
et étant connectés de telle sorte qu'une connexion directe des au moins deux sources d'énergie (105, 106) est formée par le biais d'un troisième convertisseur de tension continue (104),
de sorte que l'énergie provenant d'une première source d'énergie (105) est transmise au mécanisme d'entraînement électrique (101) par le biais d'un premier convertisseur de tension continue (102),
**caractérisé en ce que**
l'énergie provenant d'une deuxième source d'énergie (106) est également transmise au mécanisme d'entraînement électrique (101) au moyen d'un deuxième convertisseur de tension continue (103),
et un transfert d'énergie de la première source d'énergie (105) à la deuxième source d'énergie (106) est rendu possible par le biais du troisième convertisseur de tension continue (104).

8. Procédé (400) selon l'une des revendications 6 à 7, **caractérisé en ce que** les convertisseurs de tension continue (102, 103, 104) sont connectés (404) de telle sorte qu'une seule des au moins deux sources d'énergie électriques (105, 106) est connectée directement au mécanisme d'entraînement électrique (101) par le biais de deux convertisseurs de tension continue (102, 103, 104) branchés en parallèle.

9. Procédé selon l'une des revendications 6 à 8, **caractérisé en ce qu'**une troisième source d'énergie électrique (107) est connectée (405) aux trois convertisseurs de tension continue (102, 103, 104) de telle sorte que la troisième source d'énergie électrique (107) est connectée directement à l'une des au moins deux sources d'énergie électriques (105, 106).
